Europäisches Patentamt

European Patent Office

Office européen des brevets

(19)

(11) Publication number: **0 047 556**
**B1**

(12) **EUROPEAN PATENT SPECIFICATION**

(45) Date of publication of patent specification: **01.06.83**

(21) Application number: **81200968.6**

(22) Date of filing: **01.09.81**

(51) Int. Cl.³: **B 01 J 2/30,** C 05 F 9/00,
C 05 G 3/00

(54) Process for reducing the caking and dusting tendencies of urea granules.

(30) Priority: **06.09.80 NL 8005048**

(43) Date of publication of application:
**17.03.82 Bulletin 82/11**

(45) Publication of the grant of the patent:
**01.06.83 Bulletin 83/22**

(84) Designated Contracting States:
**AT BE DE FR GB IT NL SE**

(56) References cited:
**BE - A - 537 032**
**BE - A - 661 598**
**GB - A - 908 493**
**GB - A - 1 201 817**

(73) Proprietor: **UNIE VAN KUNSTMESTFABRIEKEN
B.V.
Postbus 45
NL-3500 AA Utrecht (NL)**

(72) Inventor: **Ackermans, Wilhelmus Hendrikus
Johannes
Limburgstraat 8
NL-6164 EL Geleen (NL)**
Inventor: **Willems, Michael Hendrik
Nassaustraat 9
NL-6166 BD Geleen (NL)**

(74) Representative: **Roeffen, Wilhelmus Johannes
Maria et al,
OCTROOIBUREAU DSM Postbus 9
NL-6160 MA Geleen (NL)**

Courier Press, Leamington Spa, England.

## Process for reducing the caking and dusting tendencies of urea granules

The invention relates to a process for reducing the caking and dusting tendencies of urea granules.

It is known that urea granules, when stored for a long period, exhibit an increasing capacity to cake, attended by lump formation and loss of free-flowing properties, which renders scattering difficult. To avoid such caking it has already been proposed to add formaldehyde or a formaldehyde compound such as hexamethylene tetramine or methylol urea to the urea melt to be granulated (see for instance the Swiss patent specification 363,974, the British patent specification 1,049,464 and the United States patent specification 3,112,343). The granules obtained by these processes exhibited a good storage stability and a low caking tendency. A disadvantage of this process, however, is that on recirculation of oversize and undersize product foreign compounds are introduced into the process, which may present a problem when very pure urea granules are to be produced. A further disadvantage is that due to the toxicity of formaldehyde additional safety measures are to be taken when working with this compound.

According to a known process (see British patent specification 1,201,817) urea granules are treated with polypropylene glycol having a molecular weight of at least 1000, by which the caking tendency is reduced substantially. The treatment of urea granules with polypropylene glycol having a molecular weight lower than 1000, for instance with dipropylene glycol having a molecular weight of 134, yields an unsatisfactory result. According to said patent specification the caking tendency is not eliminated when treating urea granules with polyethylene glycols having a molecular weight of 1500, 4000 and 15,000.

According to another known process (see British patent specification 908,493) the caking tendency of fertilizer granules, for instance urea granules is counteracted by coating the granules with a polyalkylene glycol having an average molecular weight of at least 10,000 and by preference at least 50,000 or higher. The amount of polyalkylene glycol to be used is 30—40 wt.%. Smaller amounts, of less than 5%, for instance 0.5—1 wt.%, are effective only when polyalkylene glycols with a molecular weight in excess of 1,000,000 are used. A disadvantage of the use of these high-molecular compounds is that at ambient temperature they are not liquid but resinous or solid, so that special measures are to be taken for applying the coating.

These known processes detract nothing from the problem that in handling and transporting bulk product, a shipping method that is increasingly used, an annoying dust formation, the so-called dusting, occurs. This dusting is caused mainly by abrasion effects during handling.

It has now been found that the caking tendency of urea granules can be reduced substantially when the granules are treated with relatively small amounts of polyalkylene glycols having a relatively low molecular weight. In addition, it has been found that this treatment also resulted in a substantial reduction of the dusting tendency during handling and transport. By applying one suitable coating, therefore, according to the invention both the caking tendency and the dusting tendency can be reduced substantially.

The process according to the invention for reducing the caking and dusting tendencies of urea granules by treating the granules with a polyalkylene glycol is characterized in that the urea granules are coated with 0.1—0.3 wt.% of a polyalkylene glycol having a molecular weight of 200—600. Use can be made of polyalkylene glycols formed from monomers with 2—5 C atoms. Good results are obtained with polyalkylene glycols having a molecular weight of 300—400.

Particularly suitable are polypropylene glycol and polyethylene glycol having a molecular weight of 300—400. Mixtures of polyethylene glycol and propylene glycol can also be used. Satisfactory results are also obtained with copolymers of ethylene glycol and propylene glycol having a molecular weight between 200 and 600. Under normal conditions, polyalkylene glycols with a molecular weight between 200 and 600 are non-viscous liquids that can be applied to the granules without the aid of solvents, for instance by mixing the granules with the polyalkylene glycol or by spraying them with it.

Coating of the granules can be effected at ambient temperature or at increased temperature, for instance at temperatures between 20°C and 75°C. The coating may be applied immediately after granulation, optionally after cooling of the granules. However, it is also possible to apply the coating after the granules have been stored for some time in the shed, for instance shortly before they are shipped. It goes without saying that this is possible only when the storage time is so short that caking has not yet occurred.

Coating of the granules prior to shipment may have advantages over coating immediately after granulation. In the former case, no foreign materials are introduced into the process together with the product to be recirculated. Because of this it is possible to switch over, without any problems, from, for instance, the production of urea for fertilizer purposes to the production of urea for technical purposes, for which a high degree of purity is required.

In the experiments with polyalkylene glycols

2

having a molecular weight of 200—600 it was found that the activity of polypropylene glycol and polyethylene glycol as regards the reduction of the dusting tendency is equivalent. As regards the reduction of the caking tendency, polypropylene glycol was found to have a better effect than polyethylene glycol. In these experiments it was also found that formaldehyde-containing urea granules that had been treated with polyethylene glycol were equivalent, both as regards the caking tendency and as regards the dusting tendency, to urea granules that did not contain formaldehyde and had been treated only with polypropylene glycol. It may, therefore, be advantageous to also treat formaldehyde-containing urea granules with polyethylene glycol according to the process of the invention, so as to obtain a product that is practically non dusting and has minimal caking tendencies. Treatment of formaldehyde-containing urea granules with polypropylene glycol does not result in any improvement as regards caking and dusting compared with urea granules containing no formaldehyde that have been treated only with polypropylene glycol. The invention will be elucidated on the basis of the Examples, without, however, being restricted thereto.

Example 1

Urea prills, with an average diameter $d_{50}=2$ mm and a spread of 0.4 mm, that had been obtained by spraying in air of a practically water-free urea melt, and that contained 0.12% of moisture after cooling, were without further treatment, stored in bags at a storage pressure of 0.0981 MPa (1 kg/cm²). After a storage period of 40 days the prills had a caking tendency of 20%. Caking tendency is understood to mean the percentage of prills still present in the form of lumps after the bags have been dropped from a height of approx. 60 cm. Upon shipping, these prills were found to have a dusting tendency of 250 mg/kg. The dusting tendency was determined by keeping a 1 kg sample in fluidized condition for half an hour and collecting the amount of dust formed in a bag filter and weighing it.

Example 2

Urea prills, with the same dimensions and properties as described in Example 1, were treated with 0.3 wt.% of polyethylene glycol having a molecular weight of 300 (PEG 300) and with 0.3 wt.% of polypropylene glycol having a molecular weight of 400 (PPG 400) respectively. After coating, the caking tendency in both cases had decreased. The prills coated with PEG 300 after 40 days had a caking tendency of 10%; the prills coated with PPG 400 showed no caking tendency. In both cases the dusting tendency had decreased to less than 50 mg/kg.

Example 3

Samples of urea prills that without coating had a caking tendency of 20% and a dusting tendency of 250 mg/kg were treated with 0.1 wt.%, 0.2 wt.% and 0.3 wt.% of PEG 300 and PPG 400 respectively. Independent of the amount of caking agent, the caking tendency of the prills treated with PEG 300 decreased to 10% and of the prills treated with PPG 400 to 0%. In all cases the dusting tendency had been reduced to less than 50 mg/kg.

Example 4

Urea granules containing 0.25 wt.% of formaldehyde had a caking tendency of 0% and a dusting tendency of 300 mg/kg. A sample of these granules was treated with 0.2 wt.% of PEG 300. The dusting tendency had decreased to less than 50 mg/kg.

Claims

1. Process for reducing the caking and dusting tendencies of urea granules by treating the granules with a polyalkylene glycol, characterized in that the granules are coated with 0.1—0.3 wt.% of a polyalkylene glycol having a molecular weight of 200 to 600.

2. Process according to claim 1, characterized in that polyalkylene glycols are used that have been formed from monomers with 2—5 C atoms.

3. Process according to claims 1—2, characterized in that polyalkylene glycols having a molecular weight of 300—400 are used.

4. Process according to claim 3, characterized in that polypropylene glycol is used.

5. Process according to claim 3, characterized in that polyethylene glycol is used.

6. Process according to claim 3, characterized in that a mixture of polypropylene glycol and polyethylene glycol is used.

7. Process according to claim 1, characterized in that a copolymer of propylene glycol and ethylene glycol is used.

8. Process according to claim 5, characterized in that urea granules that contain formaldehyde are treated with polyethylene glycol.

9. process according to claims 1—8, characterized in that the coating is applied immediately after granulation.

10. Process according to claims 1—8, characterized in that the coating is applied before the granules are shipped.

Patentansprüche

1. Verfahren zur Herabsetzung der Neigung von Harnstoffkörnern zum Zusammenbacken und Stauben durch Behandlung der Körner mit einem Polyalkylenglycol, dadurch gekennzeichnet, daß die Harnstoffkörner mit 0,1—0,3 Gew.-% eines Polyalkylenglycols mit einem Molekulargewicht von 200—600 überzogen werden.

2. Verfahren nach Anspruch 1, dadurch gekennzeichnet, daß Polyalkylenglycole verwendet werden, die aus Monomeren mit 2 bis 5 Kohlenstoffatomen gebildet wurden.

3. Verfahren nach Anspruch 1 und 2, dadurch gekennzeichnet, daß Polyalkylenglycole mit einem Molekulargewicht von 300—400 verwendet werden.

4. Verfahren nach Anspruch 3, dadurch gekennzeichnet, daß Polypropylenglycol verwendet wird.

5. Verfahren nach Anspruch 3, dadurch gekennzeichnet, daß Polyäthylenglycol verwendet wird.

6. Verfahren nach Anspruch 3, dadurch gekennzeichnet, daß ein Gemisch von Polypropylenglycol und Polyäthylenglycol verwendet wird.

7. Verfahren nach Anspruch 1, dadurch gekennzeichnet, daß ein Copolymer von Propylenglycol und Äthylenglycol verwendet wird.

8. Verfahren nach Anspruch 5, dadurch gekennzeichnet, daß formaldehydhältige Harnstoffkörner mit Polyäthylenglycol behandelt werden.

9. Verfahren nach den Ansprüchen 1 bis 8, dadurch gekennzeichnet, daß der Überzug unmittelbar nach der Granulierung aufgebracht wird.

10. Verfahren nach den Ansprüchen 1 bis 8, dadurch gekennzeichnet, daß der Überzug vor dem Versand der Körner aufgebracht wird.

**Revendications**

1. Procédé de réduction des tendances à l'agglomération et à la formation de poussières de granules d'urée par traitement de ces granules avec un polyalkylène-glycol, caractérisé en ce que les granules sont revêtus de 0,1—0,3% en poids d'un polyalkylène-glycol ayant un poids moléculaire de 200 à 600.

2. Procédé selon la revendication 1, caractérisé en ce qu'on utilise des polyalkylèneglycols qui ont été préparés à partir de monomères ayant 2—5 atomes de C.

3. Procédé selon l'une des revendications 1 et 2, caractérisé en ce qu'on utilise des polyalkylène-glycols ayant un poids moléculaire de 300 à 400.

4. Procédé selon la revendication 3, caractérisé en ce qu'on utilise du polypropylène-glycol.

5. Procédé selon la revendication 3, caractérisé en ce qu'on utilise du polyéthylène-glycol.

6. Procédé selon la revendication 3, caractérisé en ce qu'on utilise un mélange de polypropylène-glycol et de polyéthylène-glycol.

7. Procédé selon la revendication 1, caractérisé en ce qu'on utilise un copolymère de propylène-glycol et d'éthylène-glycol.

8. Procédé selon la revendication 5, caractérisé en ce que des granules d'urée contenant du formaldéhyde sont traités avec du polyéthylène-glycol.

9. Procédé selon l'une des revendications 1 à 8, caractérisé en ce que le revêtement est appliqué immédiatement après la granulation.

10. Procédé selon l'une des revendications 1 à 8, caractérisé en ce que le revêtement est appliqué avant que les granules soient livrés.